# EUROPEAN PATENT APPLICATION

(11) **EP 3 054 698 A1**
(43) Date of publication of application: **10.08.2016**
(21) Application number: 16154551.2
(22) Date of filing: 05.02.2016
(51) Int. Cl.: H04N 21/44, H04N 21/4722, H04N 21/8358, H04N 21/237

(54) **DISPLAY APPARATUS AND INFORMATION PROVIDING METHOD THEREOF**

(30) Priority: 09.02.2015 KR 20150019644
(71) Applicant: Samsung Electronics Co., Ltd., Gyeonggi-do 16677 (KR)
(72) Inventor: JUNG, Tae-ung, Gyeonggi-do, (KR); KOH, Kwang-hyun, Seoul (KR)
(74) Representative: Appleyard Lees IP LLP

(57) **Abstract**

Provided herein is a display apparatus that includes a communication interface configured to receive a first fingerprint corresponding to a first image and first time information corresponding to the first fingerprint from a server; a display configured to display an image; a detector configured to detect whether a currently displayed image corresponds to the first image based on the first fingerprint, and a controller configured to, in response to the first image being displayed, control the display to display first additional information corresponding to the first image, and determine a first time range based on the received first time information and control the detector to perform the detection within the determined first time range.

## Description

### BACKGROUND

### Field

Apparatuses and methods consistent with exemplary embodiments relate to a display apparatus and an information providing method thereof, and more particularly, to a display apparatus in which an image recognition operation may be performed only when image recognition is required, and an information providing method thereof.

### Description of Related Art

Multimedia content that previously came from a single source, broadcast television, is now coming from various sources such as cable, IPTV (Internet Protocol TV), and VoD (Video On Demand). Additionally, there are sources that provide information, such as customized advertisements or program recommendations and the like.

This type of information, such as customized advertisements and program recommendations, should be provided when related scenes are being output from a display apparatus that is currently being used. For example, it is most effective when an advertisement message corresponding to a certain product is displayed together with that product. Therefore, display apparatuses need to recognize the image currently being displayed thereon.

For this purpose, there has been introduced a technique of extracting characteristic data from an image currently being output, and then comparing the extracted characteristic data with pre-stored data to recognize the content. However, such a conventional image recognition technique has a problem in that the aforementioned comparing operation may be performed even when an unwanted image is displayed, thereby wasting computing resources.

### SUMMARY

Exemplary embodiments overcome the above disadvantages and other disadvantages not described above. Also, exemplary embodiments are not required to overcome the disadvantages described above, and an exemplary embodiment may not overcome any of the problems described above.

According to an aspect of an exemplary embodiment, there is provided a display apparatus including: a communication interface configured to receive a first fingerprint corresponding to a first image and first time information corresponding to the first fingerprint from a server; a display configured to display an image; a detector configured to detect whether a currently displayed image corresponds to the first image based on the first fingerprint; and a controller configured to, in response to the first image being displayed, control the display to display first additional information corresponding to the first image, and determine a first time range based on the received first time information and control the detector to perform the detection within the determined first time range.

The communication interface may be further configured to receive first channel information corresponding to the first image from the server, and the controller may be further configured to control the detector to perform the detection operation in response to the currently displayed image corresponding to the first channel information and the first time range.

The controller may be further configured to extract a current fingerprint from the currently displayed image, and control the communication interface to transmit the extracted current fingerprint to a real time matching server and receive currently displayed channel information corresponding to the transmitted current fingerprint from the real time matching server.

The controller may be further configured to generate a viewing log based on a result of detection performed by the detector.

The display apparatus may further include a storage configured to store the first fingerprint received from the server, and the controller may be further configured to delete an expired fingerprint of which a use period has expired from the storage.

At least one among corresponding first time information and corresponding first channel information may be included in meta data of the first fingerprint.

The first fingerprint may include unique identification information.

According to an aspect of another exemplary embodiment, there is provided an information provision system including: a server configured to transmit a first fingerprint of a first image; and a display apparatus configured to receive the first fingerprint from the server, detect whether a currently displayed image corresponds to the first image apparatus using the first fingerprint received from the server, and in response to detecting the first image is displayed, display first additional information corresponding to the first image, wherein the detection is performed within a first time range determined based on first time information.

The first fingerprint may be one of a plurality of fingerprints, and the server may be further configured to transmit the first fingerprint based on the first time information corresponding to the first fingerprint.

The server may be further configured to transmit first channel information corresponding to the first image, and the display apparatus may be further configured to receive the first channel information, and perform the detection operation in response to the currently displayed image corresponding to the first channel information within the first time range.

The display apparatus may be further configured to extract a current fingerprint from the currently displayed image, and transmit the extracted current fingerprint to the server, and the server may be further configured to transmit current channel information corresponding to the current fingerprint to the display apparatus.

According to an aspect of yet another exemplary embodiment, there is provided an information provision method of a display apparatus, the method including: receiving a first fingerprint of a first image and first time information of the first fingerprint from a server; detecting whether the first image corresponds to a currently displayed image on a display of the display apparatus using the first fingerprint; and in response to detecting the first image is displayed, displaying first additional information corresponding to the first image on the display, wherein the detecting involves performing a detection operation within a first time range corresponding to the received first time information.

The receiving may include receiving first channel information corresponding to the first image from the server, and the detecting may be performed in response to the currently displayed image corresponding to the first time information and the first channel information.

The method may further include extracting a current fingerprint from the currently displayed image; transmitting the extracted current fingerprint to a real time matching server; and receiving currently displayed channel information corresponding to the transmitted current fingerprint from the real time matching server.

The information provision method may further include generating a viewing log based on a result of the detecting.

The information provision method may further include storing the first fingerprint received from the server; and deleting an expired fingerprint of which a use period has expired.

At least one among the first time information and the first channel information may be included in meta data of the first fingerprint.

The first fingerprint may include unique identification information.

According to an aspect of still another exemplary embodiment, there is provided a non-transitory computer readable record medium including a program for executing an information provision method of a display apparatus, the information provision method including: receiving a first fingerprint of a first image and first time information of the first fingerprint from a server; detecting whether the first image corresponds to a currently displayed image on a display of the display apparatus using the first fingerprint; and in response to detecting the first image is displayed, displaying first additional information corresponding to the first image on the display, wherein the detecting involves performing a detection operation within a first time range corresponding to the received first time information.

According to an aspect of yet another exemplary embodiment, there is provided an information providing method including: receiving, from a display apparatus, a first fingerprint corresponding to a first image; searching a database of fingerprints for a determined fingerprint corresponding to the first fingerprint; determining, based on the determined fingerprint, corresponding additional information; and transmitting the corresponding additional information to the display apparatus.

According to an aspect of still yet another exemplary embodiment, there is provided a display apparatus including: a communication interface configured to receive a plurality of fingerprints corresponding to a plurality of images, each of the plurality of fingerprints including corresponding channel information and corresponding time information; a display configured to display a currently displayed image; and a controller configured to, in response to a current channel and a current time corresponding to a first channel and a first time of a first fingerprint of the plurality of fingerprints, determine whether the first fingerprint corresponds to a current fingerprint corresponding to the currently displayed image, and in response to the determining, retrieve first additional information corresponding to the first fingerprint and control the display to display the first additional information.

### BRIEF DESCRIPTION OF THE FIGURES

For a better understanding of the invention, and to show how embodiments of the same may be carried into effect, reference will now be made, by way of example, to the accompanying diagrammatic drawings in which:
FIG. 1 is a view illustrating an information provision system according to an exemplary embodiment;
FIG. 2 is a block diagram for explaining a configuration of a display apparatus according to an exemplary embodiment;
FIG. 3 is a view for explaining an image recognition method of a display apparatus according to an exemplary embodiment;
FIGS. 4 and 5 are views for explaining controlling a detection operation being performed by a display apparatus according to one or more exemplary embodiments;
FIG. 6 is a view for explaining a search for a fingerprint subjected to matching in a display apparatus according to an exemplary embodiment;
FIG. 7 is a view for explaining a method for a display apparatus to communicate with a real time matching server to obtain channel information according to an exemplary embodiment;
FIG. 8 is a view for explaining a screen being displayed on a display apparatus according to an exemplary embodiment;
FIG. 9 is a view for explaining a detailed configuration of a display apparatus according to another exemplary embodiment;
FIGS. 10 and 11 are block diagrams for explaining a configuration of a server according to one or more exemplary embodiments;
FIG. 12 is a flowchart for explaining an information provision method of a display apparatus according to an exemplary embodiment; and
FIG. 13 is a sequence view for explaining an information provision method of an information provision system according to an exemplary embodiment;

### DETAILED DESCRIPTION OF EXEMPLARY EMBODIMENTS

Certain exemplary embodiments will now be described in greater detail with reference to the accompanying drawings.

In the following description, same drawing reference numerals are used for the same elements, even in different drawings. The matters defined in the description, such as detailed construction and elements, are provided to assist in a comprehensive understanding. Thus, it is apparent that exemplary embodiments can be carried out without those specifically defined matters. Also, well-known functions or constructions are not described in detail because they would obscure the description with unnecessary detail.

Terms such as 'first' and 'second' may be used to describe various components, but they should not limit the various components. Those terms are only used for the purpose of differentiating a component from other components.

In this specification, a singular form may include a plural form as long as it is not specifically mentioned otherwise in a sentence. Furthermore, 'include/comprise' or 'consisting of' used in the specification represents that one or more characteristics, numbers, steps, operations, components, parts or combinations thereof exist, but they should not be construed as limiting the existence or possibility of adding one or more other characteristics, numbers, steps, components, parts or combinations thereof.

A 'module' or 'unit' performs at least one function or operation, and may be realized as hardware or software, or a combination of a hardware and software. Furthermore, other than those that need to be realized as a particular hardware, a plurality of 'modules' or a plurality of 'units' may be integrated into at least one module and be realized as at least one processor. Expressions such as "at least one of," when preceding a list of elements, modify the entire list of elements and do not modify the individual elements of the list.

Hereinafter, exemplary embodiments will be explained in detail with reference to the drawings attached.

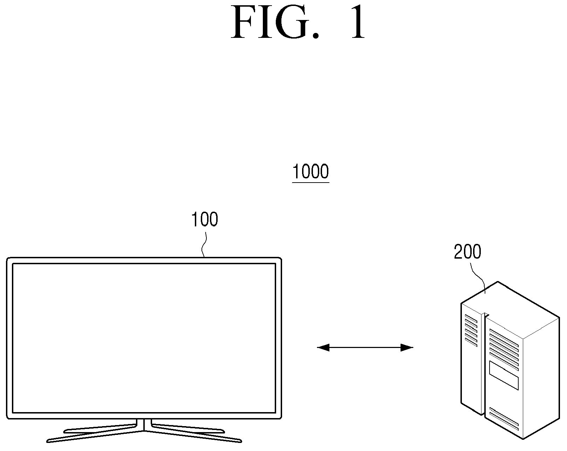

FIG. 1 is a view for explaining an information provision system according to an exemplary embodiment.

Referring to FIG. 1, the information provision system 1000 includes a display apparatus 100 and a server 200.

The display apparatus 100 may be realized as one of various types of apparatuses such as a television (TV), personal computer (PC), laptop PC, mobile phone, tablet PC, personal digital assistant (PDA), MP3 player, electronic kiosk, electronic picture frame, table display apparatus and the like. In cases in which the display apparatus 100 is realized as a portable apparatus, such as a mobile phone, tablet PC, PDA, MP3 player, and/or laptop PC, the display apparatus 100 may be called a mobile device, but in the present specification, it will be referred to as the display apparatus 100.

According to an exemplary embodiment, the display apparatus 100 is an apparatus capable of identifying an image being displayed thereon based on information provided from a server 200, and of performing an operation accordingly. For example, the display apparatus 100 may display additional information corresponding to the image while the image is displayed. The additional information may be determined based on a result of identifying the image, and creating log information based on the result of identifying the image. In such a case, the viewing log information includes a history of what a user of the display apparatus 100 has viewed, and the history may be used for advertisement purpose.

The information that the display apparatus receives from the server to identify a certain image that is being displayed includes identification information for differentiating the certain image from other images. For example, the display apparatus 100 may receive a fingerprint from the server 200 and use the fingerprint to identify the image.

The server 200 may be an apparatus capable of determining identification information for differentiating a certain image from other images and transmitting the determined identification information to the display apparatus 100. Specifically, the server 200 may transmit a fingerprint corresponding to a certain image to the display apparatus 100.

A fingerprint is data that may be used to differentiate an image from other images , and may include an attribute that differentiates one frame that forms the image from other frames.

More specifically, a fingerprint is a piece of characteristic data extracted from a video, image or audio signal included in a frame. Unlike meta data that is based on text, a fingerprint reflects unique characteristics of a signal itself. Therefore, the fingerprint may also be called fingerprint data, DNA data or genetic data. For example, in the case of an audio signal, the fingerprint will be data describing characteristics, such as the frequency and amplitude of the audio signal. As another example, in the case of an image or video signal, the fingerprint will be data describing characteristics, such as a motion vector, color and the like. A fingerprint may be extracted by one or more various algorithms. For example, an audio signal may be divided into certain time periods, and the signal size of the frequencies included in each time period may be calculated. Then, a piece of fingerprint data is created by calculating a frequency gradient based on the size difference between signals from two neighboring frequency sections, then quantizing frequency coefficients to 1 in response to the gradient being a positive number, and quantizing frequency coefficients to 0 in response to the gradient being a negative number.

A fingerprint corresponding to a certain image is stored in the server 200. There may be one or more fingerprints corresponding to a pre-registered image, and when there are two or more fingerprints, the fingerprints are managed as a fingerprint list corresponding to the certain image.

The term 'fingerprint' used in this specification may mean one fingerprint corresponding to a certain image, or in some cases, a fingerprint list consisting of a plurality of fingerprints corresponding to the certain image.

The server 200 not only stores fingerprints corresponding to a certain image, but also stores other various information corresponding to the certain image. For example, the server 200 matches various information, such as the date, time, channel of the image will be aired (i.e. broadcasted or displayed), , length of the image, ID of the image and the like, to the fingerprint of that image, and stores the same. Such information may be included in meta data of each fingerprint. Specifically, in the case of an advertising image, various information, such as the date, time, channel of the advertising image will be aired, length of the image, ID of the image and the like, may be included in the meta data of each fingerprint of the advertising image. This information regarding the image may be transmitted together with the fingerprint from the server 200 to the display apparatus 100.

To recognize the image currently being displayed on the display apparatus 100, the display apparatus 100 may extract a fingerprint from the image currently being displayed, and perform an operation of comparing the extracted fingerprint with a fingerprint received from the server 200. Herein, the display apparatus 100 may perform the comparing operation at predetermined intervals (for example, 0.5 second), but to prevent wasting of computing resources, such as a memory and a Central Processing Unit (CPU), the display apparatus 100 may perform a comparing operation at a certain timing. Such an operation by the display apparatus 100 will be explained in further detail hereinafter.

It was explained with reference to FIG. 1 that the information provision system includes one display apparatus 100 and one server 200, but according to exemplary embodiments, a plurality of display apparatuses may be connected to one server, or a plurality of servers 200 may be connected to one display apparatus or a plurality of display apparatuses instead. Other combinations are also possible.

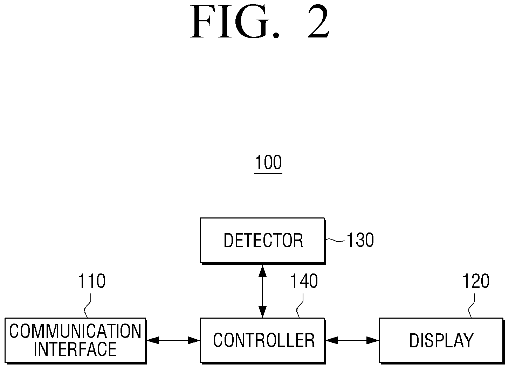

FIG. 2 is a block diagram for explaining a configuration of a display apparatus 100 according to an exemplary embodiment.

Referring to FIG. 2, the display apparatus 100 includes a communication interface 110, display 120, detector 130, and controller 140.

The communication interface 110 is for performing communication with various types of external apparatuses in various types of communication methods. It may be connected to an external apparatus through a LAN (Local Area Network) and internet, or in a wireless communication method (for example, wireless communication methods such as Z-wave, IPv4 over Low Power Wireless Personal Area Network (4LoWPAN), radio-frequency identification (RFID), long-term evolution device-to-device (LTE D2D), Bluetooth low energy (BLE), general packet radio service (GPRS), Weightless, Edge Zigbee, ANT+, Near Field Communication (NFC), Infrared Data Association (IrDA), Digital Enhanced Cordless Telecommunications (DECT), wireless local area network (WLAN), Bluetooth, Wi-Fi, Wi-Fi Direct, Global System for Mobile Communications (GSM), Universal Mobile Telecommunications System (UMTS), long-term evolution (LTE), and Wireless Broadband (WiBRO)).

Furthermore, the communication interface 110 may receive a fingerprint of an image pre-registered in the server 200 and time information of the fingerprint from the server 200. The time information of the fingerprint includes information on the time when the corresponding fingerprint will be used in a detection operation to be performed by the detector 130 that will be explained hereinafter. For example, the time information of the fingerprint may be information indicating when the image corresponding to the fingerprint will be aired, and the display apparatus 100 may perform a detection operation only when the image corresponding to the fingerprint received from the server 200 is aired.

Such time information on the fingerprint may be included in the meta data of the fingerprint.

Furthermore, the communication interface 110 may receive channel information of the image pre-registered in the server 200 from the server. Such channel information includes information on a channel on which the corresponding image is to be aired. Based on such channel information, the display apparatus 100 may perform a detection operation only when the image is displayed (i.e. aired) through a certain channel.

Such channel information may be included in the meta data of the fingerprint of the image. In such a case, the channel information of the image may also be called channel information of the fingerprint instead.

Furthermore, the communication interface 110 may receive other various types of information related to the image registered in the server from the server 200.

The aforementioned time information, channel information, and other various information may each be in a format that can be transmitted and/or received (i.e. transceived) independently from one another, or may be integrated into one format and be transmitted and/or received (i.e. transceived) together. According to an exemplary embodiment, such information may all be included together with the meta data of the fingerprint, and be received when the fingerprint is received.

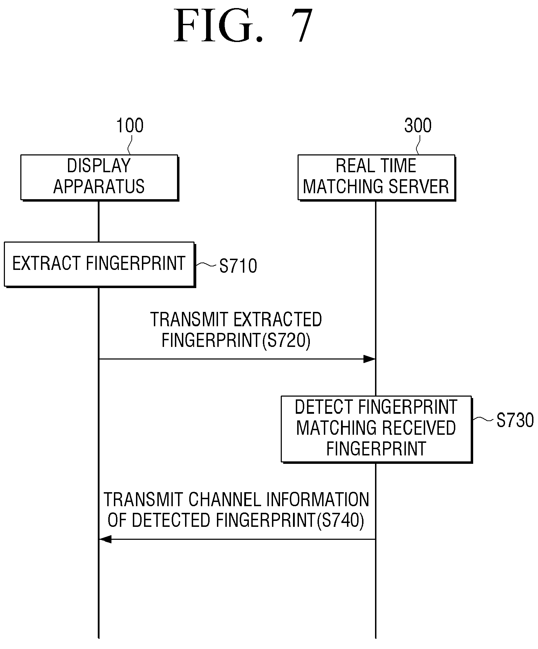

Furthermore, the communication interface 110 may transmit the fingerprint extracted from the display apparatus 100 to a real time matching server. Herein, the real time matching server may be realized as the server 200, or as another external apparatus other than the server 200. The real time matching server is a device configured to transmit information (for example, channel information) corresponding to the fingerprint received from an external apparatus to that external apparatus. This will be explained in further detail hereinafter with reference to FIG. 7.

The display 120 is configured for displaying an image. Such a display 120 may be a monitor such as an LCD or CRT, or a touch screen. Herein, an image may be a still image or a video, without limitation to a certain image.

The detector 130 is for detecting, using the fingerprint received from the server 200, whether a pre-registered image corresponding to the received fingerprint is displayed on the display 120. That is, the detector is configured to perform an image recognition operation.

More specifically, the controller 140 extracts a fingerprint from the image being displayed on the display 120, and the detector 130 may compare the extracted fingerprint with the fingerprint received from the server 200 and stored in the storage 150 to perform a detection operation.

Further, the detector 130 may perform a detection operation at every predetermined interval, or perform a detection operation only at a certain time according to a control by the controller 140. That is, the detector 130 may perform a detection operation only when necessary.

The controller 140 is configured to control the overall operation of the display apparatus 100.

The controller 140 may extract a fingerprint from an image being displayed on the display apparatus 120. More specifically, the controller 140 may capture a frame of the image at every predetermined time interval while the image is displayed on the display 120 and extract the fingerprint.

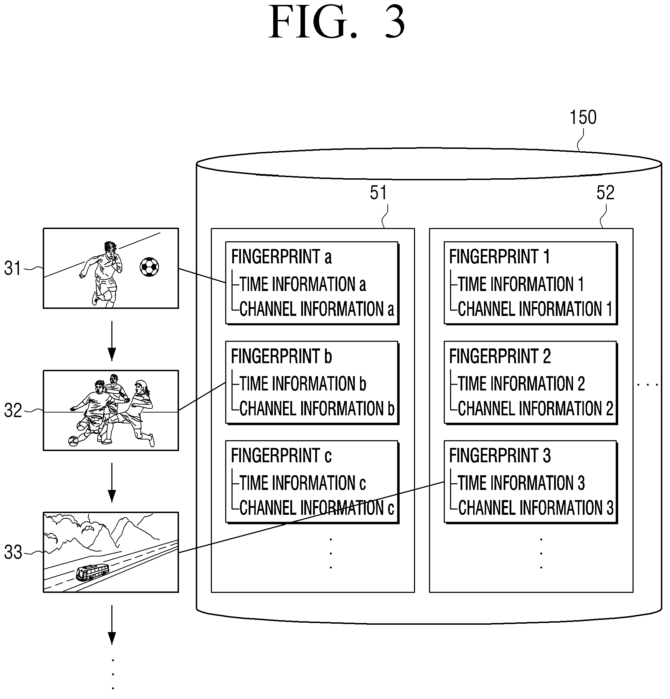

Furthermore, the controller 140 may control the detector 130 to detect whether the image being displayed on the display 120 corresponds to a certain image based on the fingerprint received from the server 200. Accordingly, the detector 130 performs a detection operation by comparing the fingerprint extracted from the image being displayed on the display 120 with the fingerprint received from the server 200. Such a detection operation will be explained in further detail with reference to FIG. 3 hereinafter.

Referring to FIG. 3, the display apparatus 100 may include a storage 150 for storing the fingerprint received from the server 200. As illustrated in FIG. 3, a fingerprint list 51 of a first image, and a fingerprint list 52 of a second image are stored in the storage 150. Furthermore, the controller 140 extracts a fingerprint from each of a first frame 31, second frame 32, and third frame 33 included in the image being displayed on the display 120, and the detector 130 compares the fingerprint stored in the storage with the extracted fingerprint. Accordingly, the controller 140 may identify that the first frame 31 and second frame 32 form the first image, and that the third frame 33 forms the second image. In this case, the channel may have been changed or an image input source may have been changed when the frame being displayed was changed from second frame 31 to the third frame 32.

Various information matched to the fingerprint is stored in the storage. Therefore, not only does the detection operation of the detector 130 enable the controller 140 to identify the image currently being displayed, but it also enables pre-stored various information regarding the image currently being displayed to be provided to the user.

Furthermore, the controller 140 may control the detector 130 to perform a detection operation at every predetermined time interval.

On the other hand, in another exemplary embodiment, the controller 140 may control the detector 130 to perform a detection operation only within a predetermined time range based on the time information of the fingerprint. As illustrated in FIG. 3, the storage 150 may store time information of each fingerprint, and the controller 140 may control the detector 130 to perform a detection operation only within a predetermined time range based on the stored time information.

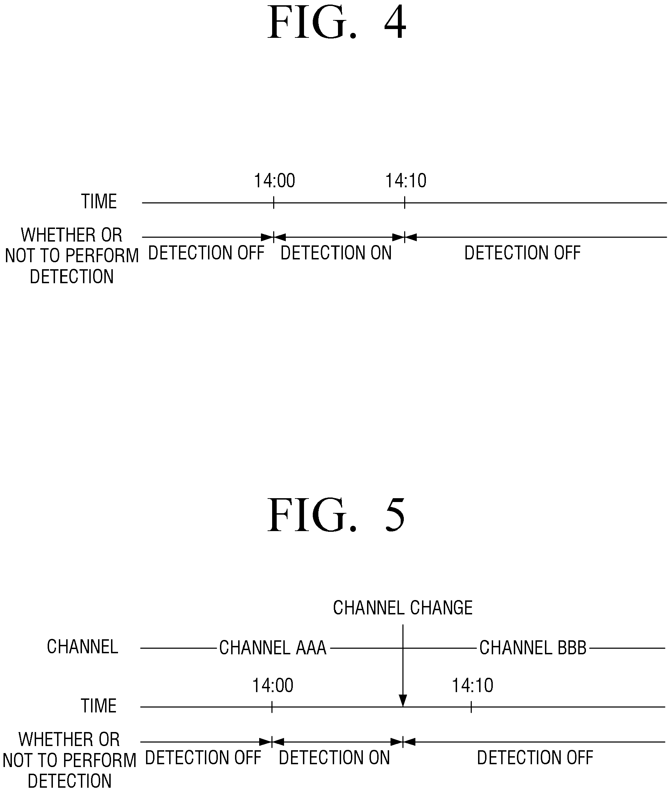

That is, the controller 140 may control the detector 130 to perform a detection operation only within a time range corresponding to the time information of the fingerprint, and not to perform a detection operation outside that time range. An aspect of this exemplary embodiment will be explained in further detail with reference to FIG. 4.

FIG. 4 is a view for explaining a detection operation of the display apparatus 100 according to an exemplary embodiment.

Referring to FIG. 4, for example, in a case in which the time information of the fingerprint of image A received from the server 200 is January 1, 2015, 14:00-14:10, the controller 140 may control the detector 130 to perform a detection operation only between 14:00-14:10 of January 1, 2015. Accordingly, because a detection operation will be performed only when image A is aired, it is possible to reduce unnecessary waste of computing resources such as a memory or a CPU.

In another exemplary embodiment, the controller 140 may control the detector 130 based on the channel information of the image received from the server 200, together with the aforementioned time information. As illustrated in FIG. 3, the storage 150 may store not only the time information of each fingerprint, but also the channel information of each fingerprint, and the controller 140 may control the detector 130 to perform a detection operation only when the image is displayed on a predetermined channel on the display 120 within a predetermined time range based on the stored time information and channel information. An aspect of this exemplary embodiment will be explained in further detail with reference to FIG. 5 hereinafter.

Referring to FIG. 5, for example, in a case in which the time information of the fingerprint of image A received from the server 200 is "January 1, 2015 14:00 - 14:10", and the channel information of image A is "channel AAA", the controller 140 may control the detector 130 to perform a detection operation only when the image is displayed on channel AAA on the display 120 between 14:00 - 14:10 of January 1, 2015. Thus, even between 14:00 ∼ 14:10 of January 1, 2015, if the image is displayed on channel BBB on the display 120, a detection operation will not be performed.

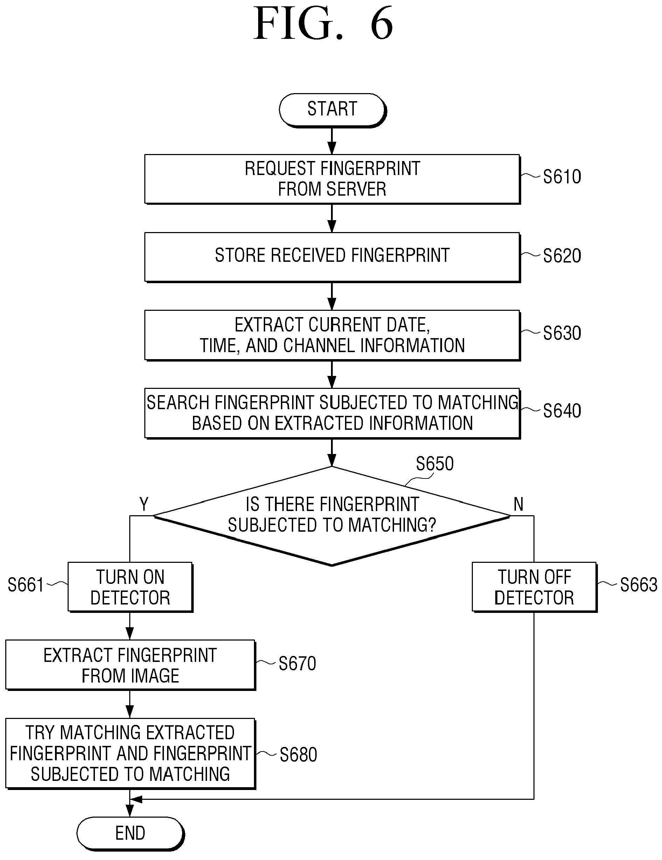

FIG. 6 is a flowchart for explaining the steps of a detection operation according to an exemplary embodiment.

Referring to FIG. 6, the controller 140 requests a fingerprint from the server 200 (S610). More specifically, the controller 140 may request the server 200 to periodically send a fingerprint of an image, and time information or channel information of the fingerprint, at a predetermined time interval. For example, the predetermined time interval may be set to around 30 minutes.

In response to the request from the controller 140, the server transmits a fingerprint (or a list consisting of a plurality of fingerprints), time information of the fingerprint, and channel information of the fingerprint, to the display apparatus 100, and the controller 140 stores the received data in the storage 150 (S620). Herein, the time information of the fingerprint or channel information of the fingerprint may be included in metadata of the fingerprint.

Furthermore, the controller 140 extracts information on the current date and current time, and channel information of the image currently being displayed on the display 120(S630). When intending to use only time information for performing a detection operation(as in the exemplary embodiment of FIG.4), the controller 140 extracts information on the current date and current time, but when intending to use both the time information and channel information(as in the exemplary embodiment of FIG.5), the controller 140 extracts information on the current date and current time, and the channel information of the image currently being displayed on the display 120. Hereinafter, explanation will be made based on an assumption that both the time information and channel information are used.

Furthermore, the controller searches whether there is a fingerprint subjected to matching from among the fingerprints stored in the storage 150 using the extracted information (S640). That is, a fingerprint corresponding to the current time and current channel is determined as the fingerprint subjected to matching. The fingerprints subjected to matching are fingerprints with time and/or channel information such that they are candidate fingerprints for a match with a yet to be extracted fingerprint of the image currently being displayed at the current time and/or current channel.

The controller 140 determines whether there is a fingerprint subjected to matching (S650), and in response to determining there is a fingerprint subjected to matching, the controller 140 controls the detector 130 to perform a detection operation (S661), but in response to determining there is no fingerprint subjected to matching, the controller 140 controls the detector 130 not to perform a detection operation (S663).

In response to determining there to be a fingerprint subjected to matching, the controller 140 extracts a fingerprint from the image currently being displayed (S670). That is, the controller 140 performs an operation of extracting the fingerprint only when a fingerprint subjected matching exists. However, according to another exemplary embodiment, to extract channel information of the image currently being displayed through the display 120, the controller 140 may operate to extract a fingerprint at every predetermined interval from the image being displayed regardless of there being a fingerprint subjected to matching. This will be explained in further detail hereinafter with reference to FIG. 7.

Furthermore, the controller 140 controls the detector 130 to try matching the extracted fingerprint with the fingerprint subjected to matching (S680). Accordingly, the detector 130 performs a detection operation of detecting whether the image currently being displayed is a match to a certain image.

To control the detection operation of the detector 130 based on the channel information of the fingerprint, the controller 140 may be capable of identifying which channel the image currently being displayed on the display 120 is aired. For this purpose, the display apparatus 100 may use the fingerprint. This will be explained in further detail with reference to FIG. 7.

FIG. 7 is a view for explaining an operation to be performed by the display apparatus 100 for obtaining channel information according to an exemplary embodiment.

Referring to FIG. 7, the controller 140 may extract a fingerprint from an image displayed on the display 120 (S710), and transmit the extracted fingerprint to the real time matching server 300 (S720). The real time matching server 300 is an apparatus configured to receive a fingerprint from an external apparatus and to notify channel information corresponding to the received fingerprint to the external apparatus. In the real time matching server 300, fingerprints of a pre-registered image and channel information matching each fingerprint are stored.

The real time matching server 300 performs an operation for detecting whether there is a fingerprint matching the fingerprint received from the display apparatus 100 (S730). In response to detecting a matching fingerprint, the real time matching server 300 transmits channel information of the extracted fingerprint to the display apparatus 100 based on the channel information of the matching fingerprint (S740).

It was explained above, with reference to FIG. 7, that the real time matching server 300 is a different apparatus from the aforementioned server 200, however according to one or more exemplary embodiments, the server 200 may be realized to also perform operations of the real time matching server 300.

According to an aspect of this exemplary embodiment, the controller 140 may transmit a fingerprint to the real time matching server at every predetermined interval and check the channel of the image being displayed on the display 120, and thus the controller 140 may control the detector 130 to perform a detection operation only when the image is displayed on a predetermined channel based on the channel information of the fingerprint received from the real time matching server 200.

Time information and channel information of the fingerprint are stored in the storage 150 together with the fingerprint. In this case, the time information and channel information may be included in meta data of the fingerprint. For example, in the case of an advertising image, meta data of a first fingerprint and a second fingerprint of the advertising image may be configured as follows.

### <Meta data of the first fingerprint>

| | |
|---|---|
| | -Advertiser: Samsung Electronics |
| | -Title of advertisement: Galaxy Note 4 |
| | -Advertisement ID: BA193242423324 |
| | -Advertising group: Galaxy |
| | -Length of advertisement: 15 seconds |
| | -Aired date: January 30, 2015 |
| | -Aired time: 14:10:15 |
| | -Aired channel: AAA |

### <Meta data of the second fingerprint>

| | |
|---|---|
| | -Advertiser: Samsung Electronics |
| | -Title of advertisement: Galaxy Note 4 |
| | -Advertisement ID: BA193242423324 |
| | -Advertising group: Galaxy |
| | -Length of advertisement: 15 seconds |
| | -Aired date: January 30, 2015 |
| | -Aired time: 14:10:20 |
| | -Aired channel: AAA |

In this case, the controller 140 may receive the first fingerprint and second fingerprint from the server 200 and store the same in the storage 150, and control the detector 130 to perform a detection operation when an image (image frame) is displayed through channel AAA at 14:10:15 on January 30, 2015 and when an image (image frame) is displayed through channel AAA at 14:10:20 on January 30, 2015.

Depending on circumstances of the broadcasting station, or in the case of providing a PVR (Personal Video Recorder) function in the display apparatus 100, an image may not be aired at the exact scheduled time. Therefore, the time information of the fingerprint may be set to a broad time range. For example, even if the image corresponding to the first fingerprint is scheduled to be aired on 14:10:15 on January 30, 2015, the time information may be set such that a detection operation is performed from 14:00:15 which is 10 minutes earlier. Such setting of time information may be performed by the server 200 or in the display apparatus 100 by the user.

Although it was explained hereinabove that information of only one time point is included in the time information, the time information may include information on, or interval information of, two or more time points. For example, because advertising images are characterized to be aired repeatedly, time information of a fingerprint of an advertising image may also include information on the interval between repetition.

Furthermore, the controller 140 may generate viewing log information based on the detection operation performed by the detector 130. The viewing log information includes history information of the images displayed by the display apparatus 100.

Information included in the aforementioned meta data of the first fingerprint and aforementioned meta data of the second fingerprint, for example, an advertiser's ID and advertiser may be included in the viewing log information. Furthermore, the viewing log information may also include information on when the user viewed the image.

The controller 140 may store the generated log information in the storage 150 and update the same, and may upload the log information to an external server. Accordingly, the advertiser may read the history information generated in the display apparatus, which may be provided in each household. For example, because the viewing log information includes the ID of the advertisement viewed, the advertiser can find out how much a certain advertisement of the advertiser was exposed to users.

In another exemplary embodiment, in response to determining that a certain image is displayed from such an operation of the detector 130, that is in response to recognizing a certain image, the controller 140 may control the display 120 to display additional information for the recognized image together with the image.

More specifically, additional information to be displayed when the certain image is displayed, is matched to a fingerprint and stored in the storage 150. Such additional information may have been received from the server 200 together with the fingerprint.

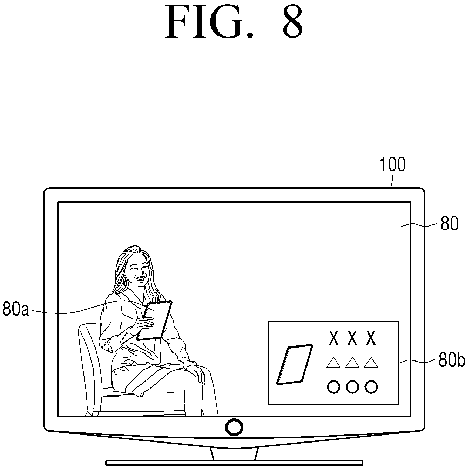

Additional information may include various pieces of information related to an image. That is, information on people in the image, information on the music in (i.e. played with) the image, advertisement information on a certain item in the image, or information on the broadcasting program. For example, the additional information may include information on places where one can buy a certain item included in the image, information on an open market URL address where the item is on sale, a composer of the music included in (i.e. played with) the image, or information on the URL address from which that music can be downloaded. FIG. 8 illustrates an example of such additional information being displayed.

Referring to 8, an advertising image 80 (image frame) that advertises a portable device is displayed on the display apparatus 100. Together with the advertising image 80, additional information 80b related to the portable device 80a included in the advertising image may be displayed as well.

Additional information 80b may include price information of the portable device 80a. More specifically, in response to the controller 140 extracting a fingerprint from the advertising image 80, and detecting that there is a same fingerprint as the extracted fingerprint among the fingerprints received from the server 200, the additional information 80b matched to the detected same fingerprint and stored in the storage 150 is displayed at the same time when the advertising image 80 is displayed on the display 120. According to an aspect of this exemplary embodiment, because the additional information is displayed together with the advertising image 80 while a certain product is displayed, an advertising effect for the certain product may be maximized.

According to another exemplary embodiment, such additional information may be transmitted to a user's terminal apparatus and displayed thereon instead of being displayed on the display apparatus 100. For this purpose, the controller 140 may transmit the additional information to the user's terminal apparatus.

As aforementioned, according to various exemplary embodiments, it is possible to generate viewing log information using a fingerprint, and provide various pieces of information, such as additional information on the displayed image, to the user.

The controller 140 may request the server 200 to provide a fingerprint of an image and time information or channel information of the fingerprint at every predetermined time interval. The time interval may be, for example, 30 minutes.

The controller 140 stores the fingerprint, time information of the fingerprint or channel information of the fingerprint received from the server in the storage 150. Specifically, to efficiently manage a memory space of the storage 150, the controller 140 may delete fingerprints of which use periods have expired from the storage 150, based on the time information of the fingerprint.

More specifically, the controller 150 deletes the fingerprints having time information relating to a passed time, i.e. past, from the storage 150 based on the current time. Otherwise, the controller 140 may delete a fingerprint that has been used from the storage 150.

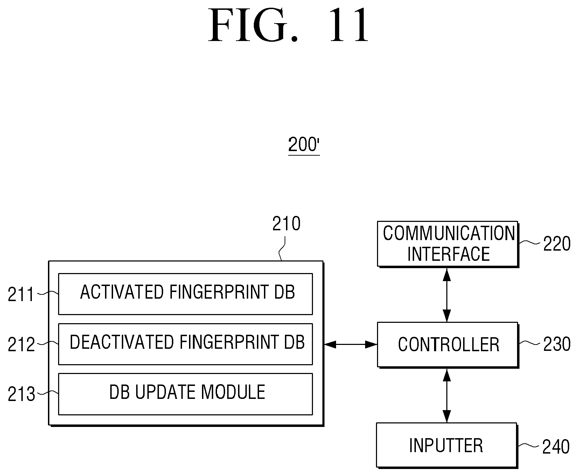

In another exemplary embodiment, the storage 150 may manage a list of fingerprints integrated therein, and instead of updating the storage 150 by individually deleting the fingerprints which have expired, the controller 140 may receive an updated fingerprint list from the server 200, and substitute an existing fingerprint with a fingerprint from the updated fingerprint list. An aspect of this exemplary embodiment will be explained in further detail hereinafter with reference to FIG. 11.

Hereinabove, it was explained that the detector 130 and controller 140 are separate components, however according to one or more exemplary embodiments, the detector 130 and controller 140 may be integrated as one processor included in the display apparatus 100.

Hereinabove, it was explained that exemplary embodiments are applied to the display apparatus 100 having the display 120, but there is no limitation thereto. The various exemplary embodiments may be realized as a content processing apparatus (for example, set top box) that may be wirelessly or wiredly connected to an apparatus having a display. In such a case, the contents processing apparatus may be provided with the aforementioned communication interface 110, detector 130 and controller 140, and may provide a piece of content (image) to the apparatus having a display through the communication interface 110.

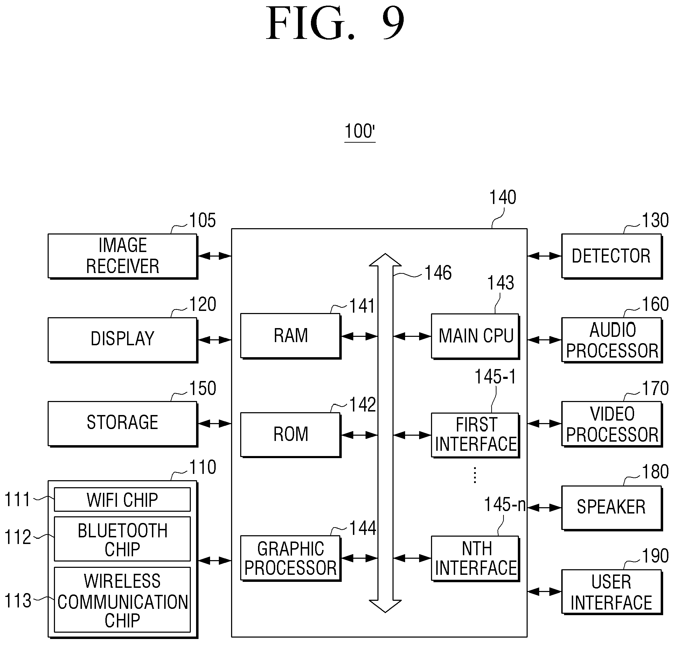

FIG. 9 is a block diagram illustrating an example of a detailed configuration of a display apparatus 100' according to various exemplary embodiment.

According to FIG. 9, the display apparatus 100' includes an image receiver 105, communication interface 110, display 120, detector 130, controller 140, storage 150, audio processor 160, video processor 170, speaker 180, and user interface 190. Detailed explanation on the components of FIG. 9 that are the same as the components illustrated in FIG. 1 will be omitted.

The image receiver 105 receives image data through various sources. For example, the image receiver 105 may receive broadcasting data from an external broadcasting station, an external apparatus (for example, digital versatile disc (DVD) player, Blu-ray disc (BD) player and the like), or image data stored in the storage 150.

Furthermore, the image receiver 105 may include a tuner, demodulator, and signal separator. The tuner may perform a function of tuning to a broadcasting signal according to a tuning control signal of the controller 140 and receiving the same. Furthermore, the demodulator may perform a function of receiving the tuned signal and demodulating the same. More specifically, in the case of digital cable broadcasting, a Qaudrature Amplitude Modulation (QAM) method may be used, and in the case of digital groundwave broadcasting, a Vestigial Side Band (VSB) modulating method may be used. Therefore, the demodulator may realize the demodulating method differently depending on the type of the broadcasting signal being transmitted and received. The signal separator separates the received broadcasting signal into an image signal, voice signal and electronic program guide (EPG) information.

The communication interface 110 may communicate with an external apparatus according to various communication methods.

The communication interface 110 includes various communication chips such as a Wi-Fi chip 111, Bluetooth chip 112, and wireless communication chip 113 and the like. The Wi-Fi chip 111 and Bluetooth chip 112 each communicate according to the Wi-Fi method and Bluetooth method, respectively. In the case of the Wi-Fi chip 111 or Bluetooth chip 112, various pieces of information related to connection, such as information on a Service Set Identification (SSID), session key and the like, may first be transceived, and then after a communication connection is made using this information, various pieces of information may be transceived. The wireless communication chip 113 refers to a chip configured to communicate according to various communication standards, such as IEEE, Zigbee, 3rd Generation (3G), 3rd Generation Partnership Project (3GPP), LTE and the like. Besides the above, the communication interface 110 may further include a near field communication (NFC) chip configured to operate in an NFC method in which 13.56MHz band is used of among various RFID frequency bands such as 135kHz, 13.56MHz, 433MHz, 860∼960MHz, and 2.45GHz.

Specifically, the communication interface 110 may communicate with the server 200 or real time matching server 300, and transceive a fingerprint, time information or channel information of the fingerprint, and additional information and the like.

The display 120 may be realized as one of various types of displays such as a Liquid Crystal Display (LCD), Organic Light Emitting Diode (OLED) display, and Plasma Display Panel (PDP) and the like. In the display 120, a driving circuit and backlight, which may be realized as an A-Si thin-film transistor (TFT), low temperature poly silicon (LTPS) TFT, and organic TFT (OTFT), may be included as well.

The controller 140 controls the overall operation of the display apparatus 100' using various programs stored in the storage 150.

More specifically, the controller 140 includes a random-access memory (RAM) 141, read-only memory (ROM) 142, main central processing unit (CPU) 143, graphic processor 144, first to nth interfaces 145-1~145-n, and bus 146. The RAM 141, ROM 142, main CPU 143, graphic processor 144, and first to nth interfaces 145-1~145-n may be connected to one another through one or more buses 146.

The first to nth interfaces 145-1~145-n are connected to the aforementioned various components. One of the interfaces may be a network interface configured to be connected to an external apparatus through a network.

The main CPU 143 accesses the storage 150, and performs booting using an operating system (O/S) stored in the storage 150. In addition, the main CPU 143 executes various operations using various programs, contents, and data stored in the storage 150.

In the ROM 142, a set of commands for system booting is stored. In response to a turn on command being input, and power being provided, the main CPU 143 copies the O/S stored in the storage 150 into the RAM 141 according to a command stored in the ROM 142, and executes the O/S to boot the system. When the booting is completed, the main CPU 143 copies the various application programs stored in the storage 150 into the RAM 141, and executes the programs that have been copied into the RAM 141 to perform various operations.

The graphic processor 144 generates a screen that includes various objects, such as icons, images, text and the like using an operator and renderer. The operator computes attribute values, such as a coordinate value, shape, size, and color and the like, of each object to be displayed according to a layout of the screen based on the received control command. The renderer may generate a screen in various layouts that include an object based on the attribute value computed in the operator. The screen generated in the renderer is displayed within a display area of the display 110.

The controller 140 may recognize the channel of the image currently being displayed through the display 120. According to an exemplary embodiment, the controller 140 may perform a server matching operation, as illustrated in FIG. 7, and recognize the current channel on which the image is currently displayed.

On the other hand, according to another exemplary embodiment, the controller 140 may recognize the current channel using EPG information separated from the signal separator. EPG information is a type of data service in digital multichannel broadcasting that provides a program table or information on the contents of each program. According to an aspect of this exemplary embodiment, the controller 140 may identify what the current channel is even without inquiring an external apparatus such as the real time matching server, and thus a fingerprint need not be extracted at every predetermined interval for the server matching operation.

Operations of the aforementioned controller 140 may be performed based on a program stored in the storage 150.

The storage 150 stores various pieces of data such as an O/S software module for driving the display apparatus 100', various multimedia contents, various applications, various contents being input or set during execution of an application and the like.

Specifically, the storage 150 may store a fingerprint corresponding to a certain image received from the server 200, time information of the fingerprint or channel information of the fingerprint. The storage 150 stores a fingerprint, time information of the fingerprint, and channel information of the fingerprint for each image. The time information and channel information stored in the storage are used by the controller 140 to turn on/off the detector 140, and the stored fingerprints are used by the detector 130 to perform an image detection operation (image recognition operation).

The audio processor 160 is a component configured to process audio data. In the audio processor 160, various processing, such as decoding or amplifying audio data or noise filtering, may be performed.

The video processor 170 is a component configured to process video data. In the video processor 170, various image processing operations, such as decoding, scaling, noise filtering, frame rate conversion and resolution conversion, may be performed on video data.

The speaker 180 is a component configured to output not only various pieces of audio data processed in the audio processor 160, but also various alarm sounds or voice messages.

The user interface 190 receives various user interactions. Herein, the user interface 190 may be realized in various formats according to various exemplary embodiments, depending on display apparatus 100. In the case in which the display apparatus 100 is realized as a digital TV, the user interface 190 may be realized as a remote control receiver that receives remote control signals from a remote control apparatus, a camera that senses a user motion, or a microphone that receives a user's voice. Furthermore, in the case in which the display apparatus 100 is realized as a touch based portable terminal, the user interface 190 may be realized in a touch screen format that forms a mutual layered structure with a touch pad. In such a case, the user interface 190 may be used as the aforementioned display 120.

Besides the above, various external input ports may be further included to connect various external terminals such as a headset, mouse and LAN and the like.

FIG. 9 illustrates an example of a detailed configuration of various components included in the display apparatus 100'. According to various exemplary embodiments, some of the components illustrated in FIG. 9 may be omitted or modified, or further components may be added. For example, in the case in which the display apparatus 100' is realized as a mobile phone, a GPS receiver configured to determine the current location of the display apparatus 100', and a Digital Media Broadcasting (DMB) receiver configured to receive and process a DMB signal may be further included.

Hereinafter, explanation on the server 200 that forms the information provision system 1000 together with the aforementioned display apparatus 100 will be explained.

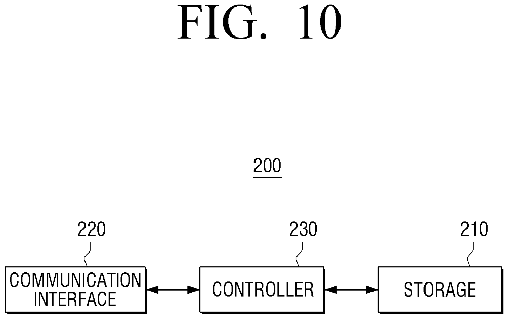

FIG. 10 is a block diagram for explaining a configuration of the server 200 according to an exemplary embodiment.

Referring to FIG. 10, the server 200 includes a storage 210, a communication interface 220, and a controller 230.

The storage 210 stores various pieces of data such as an O/S software module for driving the server 200, various multimedia contents, various applications, and various contents that are input or set during execution of applications.

Specifically, the storage 210 stores a fingerprint of a registered image. More specifically, the fingerprint is matched to time information of the fingerprint and channel information of the image corresponding to the fingerprint, and then stored in the storage 210.

Time information of a fingerprint includes information on the time when the fingerprint will be used in image recognition. Time information of a fingerprint may be included in meta data of the fingerprint.

Channel information of an image includes information on a channel where the image will be aired. Such channel information may be included in meta data of the fingerprint of the image. In such a case, channel information of the image may be called channel information of the fingerprint.

Time information and channel information of a fingerprint may be set by the user through an inputter of the server 200. For example, the user may set time information of a fingerprint to the time when the image (image frame) corresponding to the fingerprint is to be aired. Depending on circumstances of a broadcasting station, or when a PVR terminal is used, an image may not be aired at the exact scheduled time, and thus an error in the time information of the fingerprint may be considered.

Furthermore, the storage 210 may further store other various pieces of information of the fingerprint. For example, additional information to be displayed along with the image of the fingerprint may be matched to the fingerprint, and stored in the storage 210. Such additional information may be transmitted along with the fingerprint, or time and channel information of the fingerprint, being transmitted to the display apparatus 100.

Additional information may include various pieces of information related to an image, that is, information on people in the image, information on the music included in (i.e. played with) the image, advertisement information on a certain item included the image, or information on the broadcasting program. For example, additional information may include information on places where one can buy a certain item included in the image, information on an open market URL address where the item is on sale, a composer of the music reproduced while the image is displayed, or information on the URL address from which that music can be downloaded.

The communication interface 220 is a component for performing communication with various types of external apparatuses in various types of communication methods. The communication interface 220 may not only be connected to an external apparatus through a LAN (Local Area Network) and internet, but also via a wireless communication (for example, wireless communication methods such as Z-wave, 4LoWPAN, RFID, LTE D2D, BLE, GPRS, Weightless, Edge Zigbee, ANT+, NFC, IrDA, DECT, WLAN, Bluetooth, Wi-Fi, Wi-Fi Direct, GSM, UMTS, LTE, and WiBRO).

Furthermore, the communication interface 220 may transmit the fingerprint, time information of the fingerprint, and channel information of the image stored in the storage 210 to the display apparatus 100.

Furthermore, the communication interface 220 may transmit the aforementioned additional information to the display apparatus 100.

Furthermore, the communication interface 220 may receive an image. The server 200 may extract a fingerprint from the received image and store the extracted fingerprint in the storage 210. Otherwise, the server 200 may receive the fingerprint of the image from an external server and store the received fingerprint in the storage 210.

Furthermore, the communication interface 220 may receive a fingerprint from the display apparatus 100, and transmit channel information of the received fingerprint to the display apparatus 100.

The controller 230 is a component configured to control the overall operation of the server 200. More specifically, the controller 230 controls the overall operation of the server 200 using various programs stored in the storage 210. For example, the controller 230 may include a CPU, RAM, ROM, and system bus. Herein, the ROM is a component for storing a set of commands for system booting, and the CPU copies the O/S (Operating System) stored in the storage 210 into the RAM according to the command stored in the ROM, and executes the O/S to boot the system. When the booting is completed, the CPU may copy the various applications stored in the storage into the RAM, and may execute the various applications to perform various operations. Hereinabove, it was explained that the controller 230 includes only one CPU, however according to one or more exemplary embodiments, the controller 230 may be realized as a plurality of CPUs (or Digital Signal Processor (DSP), System on Chip (SoC) and the like).

The controller 230 may control the communication interface 210 to transmit the fingerprint and time information of the fingerprint stored in the storage 210 to the display apparatus 100.

Furthermore, the controller 230 may receive information on the fingerprint list stored in the display apparatus 100 from the display apparatus 100, and transmit the updated fingerprint list to the display apparatus 100. More specifically, the controller 230 may check version information of the fingerprint list stored in the display apparatus 100 based on the information received, and transmit the updated fingerprint list to the display apparatus 100.

Of the fingerprints stored in the storage, the controller 230 may transmit only the fingerprints that satisfy a predetermined condition to the display apparatus 100.

More specifically, the controller 230 may transmit only the fingerprint corresponding to a predetermined time range of the plurality of pre-registered images based on the time information of the fingerprint stored in the storage 210. In this case, the fingerprint to be transmitted to the display apparatus 100 is an activated fingerprint, and thus the fingerprints not to be transmitted may be managed as deactivated fingerprints. An aspect of this exemplary embodiment will be explained with reference to FIG. 11 hereinafter.

FIG. 11 illustrates a block diagram for explaining a server according to another exemplary embodiment.

Referring to FIG. 11, the server 200' includes a storage 210, communication interface 220, controller 230, and inputter 240. Detailed explanation on the components of FIG. 11 that are the same as the components illustrated in FIG. 10 will be omitted.

The storage 210 includes an activated fingerprint database 211, deactivated fingerprint database 212, and database update module 213.

The inputter 240 is configured for receiving a user input. Specifically, through the inputter 240, the user may input channel information or time information of the fingerprint. The input channel information and time information may include meta data of the fingerprint.

Based on the time information of the fingerprint, the controller 230 stores a fingerprint having the time information corresponding to the pre-determined time range in the activated fingerprint database 211, and stores a fingerprint having the time information that does not correspond to the pre-determined time range in the deactivated fingerprint database 212. Such operations of the controller 230 may be performed by the database update module 213.

More specifically, the controller 230 stores only the fingerprint having the time information corresponding to a certain time range around the current time, i.e. the pre-determined time range, in the activated fingerprint database 211, and stores the remaining fingerprints in the deactivated fingerprint database 212.

For example, in the case in which the current time is 9:00 of January 20, 2015, and the time range is set to 1 hour, only a fingerprint having the time information corresponding to 9:00-10:00 of January 20, 2015 is stored in the activated fingerprint database 211, and the remaining fingerprints are stored in the deactivated fingerprint database 212.

The controller 230 transmits, to the display apparatus 100, the fingerprint stored in the activated fingerprint database 211 at the time a request for transmission of a fingerprint is made from the display apparatus 100.

In this exemplary embodiment, instead of transmitting all the fingerprints stored in the server 200' to the display apparatus 100, it is possible to transmit only the fingerprints needed for detecting the image to be aired within a certain time range, and thus it is also possible to save the storage space in the storage 150 of the display apparatus 100.

The time information of the fingerprint stored in the server 200' may be directly input by the user through the inputter 240, or may be modified by the server. In response to the time information being modified, the database update module 213 updates the activated fingerprint database 211 and the deactivated fingerprint database 212 taking into account the modified time information.

It was explained hereinabove that the user directly inputs the time information and channel information of the fingerprint through the inputter 240, but if the meta data of the fingerprint is digitized in a pre-determined format that includes the channel information and time information, meta data of the fingerprint configured in such a format may be uploaded to the server 200'.

Hereinafter, an exemplary embodiment will be explained with reference to FIG. 10. The controller 230 may extract a fingerprint from an image received through the communication interface 220, and store the extracted fingerprint in the storage 210. Herein, the controller 230 may match, i.e. pair, the time information and channel information of a fingerprint to each fingerprint and store the matched time information and channel information in the storage 210.

Furthermore, in response to receiving a fingerprint from the display apparatus 100, the controller 230 may transmit channel information corresponding to the received fingerprint to the display apparatus 100. Such a server matching operation was explained hereinabove with reference to FIG. 7, and thus further explanation will be omitted.

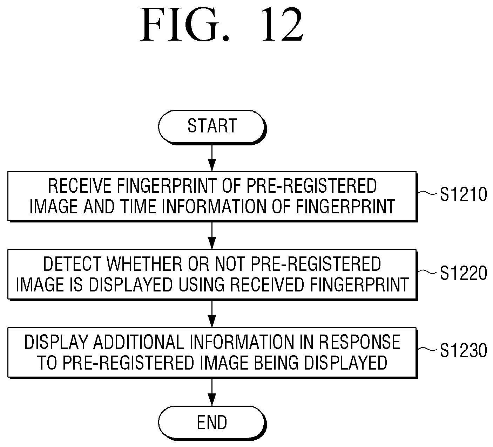

FIG. 12 is a flowchart for explaining an information provision method of the display apparatus 100 according to an exemplary embodiment.

Referring to FIG. 12, the display apparatus 100 receives the fingerprint of a pre-registered image and time information of the fingerprint from the server 200 (S1210). In this case, channel information of the pre-registered image may be received together with them as well. At least one of the time information and channel information may be included in the meta data of the fingerprint.

The display apparatus 100 may store the fingerprint received from the server in the storage. Furthermore, the display apparatus may delete a fingerprint of which the use period has expired based on the time information of the fingerprint stored.

Upon receiving the fingerprint and other information from the server, the display apparatus 100 detects whether the pre-registered image corresponding to the received fingerprint is currently displayed on the display of the display apparatus using the received fingerprint (S1220).

In this case, the display apparatus 100 performs a detection operation only within a pre-determined time range based on the received time information. In the case in which channel information is also received, the display apparatus 100 performs a detection operation only when an image is displayed through a pre-determined channel within the pre-determined time range based on the received time information and channel information.

In response to the pre-registered image being displayed, the display apparatus 100 displays additional information of the pre-registered image on the display (S1230).

Furthermore, the display apparatus 100 may not only display the additional information, but also generate viewing log information based on the detection result.

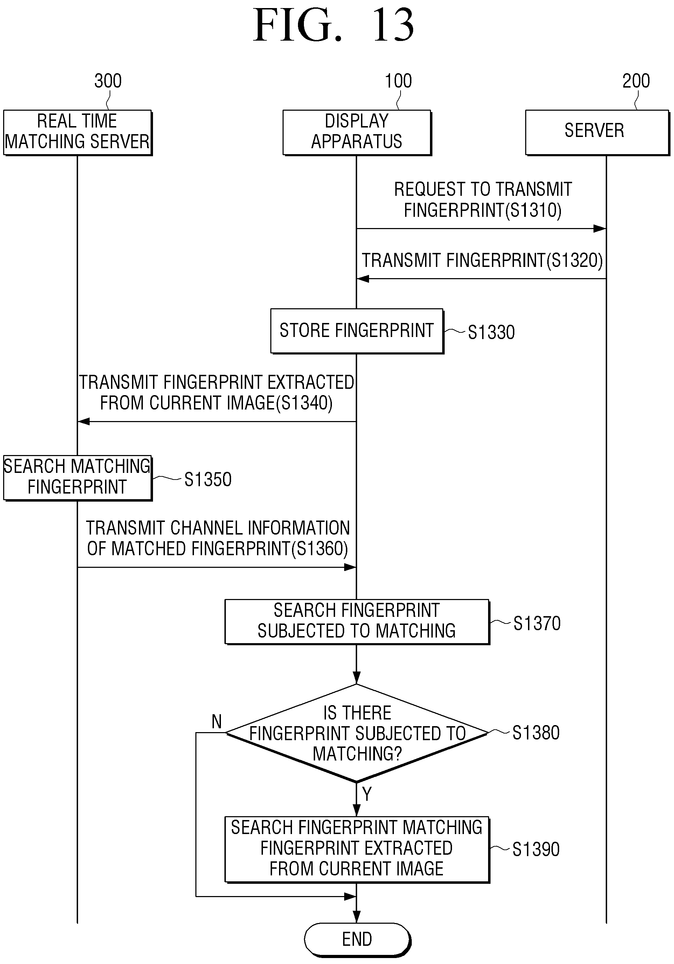

At the aforementioned detecting step, it needs to be recognized which channel is currently being displayed on the display apparatus 100. For this purpose, the display apparatus 100 may receive information on the current channel from the real time matching server 300. Furthermore, the display apparatus 100 may decide the fingerprint having certain channel information as a subject fingerprint to be matched, i.e. a fingerprint subjected to matching. This will be explained in further detail with reference to FIG. 13 hereinafter.

FIG. 13 is a sequence view for explaining an information provision method in an information provision system according to an exemplary embodiment. FIG. 13 will be explained based on an assumption that time information and channel information of a fingerprint are transmitted together with the fingerprint being transmitted or received. According to an aspect of this exemplary embodiment, such time information and channel information are included in the meta data of the fingerprint.

Referring to FIG. 13, the display apparatus 100 requests the server 200 to transmit a fingerprint (S1310). Furthermore, the server 200 transmits the fingerprint to the display apparatus 100 in response to the request (S1320).

In this case, the request received from the display apparatus 100 may include version information of the fingerprint stored in the display apparatus 100. Based on the version information, the server 200 may transmit an updated version of the fingerprint to the display apparatus 100.

Furthermore, instead of transmitting all the fingerprints stored in the server 200, the server 200 may transmit only the fingerprints that satisfy a pre-determined condition and reduce the network cost. More specifically, the server 200 may transmit only fingerprints of the images to be aired within a certain time range from the current time to the display apparatus 100. Because information of the time when an image corresponding to a fingerprint is matched to each fingerprint, it is possible to use such time information.

Furthermore, the display apparatus 100 stores the fingerprint received from the server 200 (S1330). More specifically, in response to receiving an updated fingerprint, the display apparatus 100 substitutes the pre-stored fingerprint with the updated fingerprint and stores the updated fingerprint. In another exemplary embodiment, the server 200 may transmit information of the fingerprint to be deleted to the display apparatus 100, and accordingly, the display apparatus 100 may delete some of the fingerprints from among those stored to manage the storage space. Otherwise, the display apparatus 100 may itself extract and delete the fingerprints of which the use period has expired.

In addition, to perform a server matching operation for obtaining channel information, the display apparatus 100 may extract a fingerprint from the image currently being displayed and transmit the extracted fingerprint to the real time matching server 300 (S1340). More specifically, the display apparatus 100 extracts the fingerprint from the image currently being displayed at every predetermined interval, and transmits the extracted fingerprints to the real time matching server 300.

The real time matching server 300 is provided with a fingerprint database, and channel information is matched to each fingerprint and stored therein. In response to receiving a fingerprint from the display apparatus 100, the real time matching server 300 performs a search to determine whether there is a fingerprint matching the received fingerprint (S1350). In response to there being a matching fingerprint, the real time matching server 300 transmits channel information of the matching fingerprint to the display apparatus 100 (S1360).

The display apparatus 100 may recognize which channel corresponds to the current image based on the channel information received from the real time matching server 300. The display apparatus 100 searches to determine whether there is a fingerprint to be matched, i.e. a fingerprint subjected to matching, based on the channel information received from the real time matching server 300 and the current time (S1370). In other words, the display apparatus 100 searches to determine whether there is a fingerprint matching the current time and current channel.

If there is no fingerprint to be matched, the display apparatus 100 does not perform a comparing operation between the fingerprint of the image currently being displayed and the stored fingerprint. That is, the display apparatus 100 performs the comparing operation only when there is a fingerprint to be matched.

More specifically, in response to determining that there is a fingerprint subjected to matching (S1380), the display apparatus 100 extracts a fingerprint from the image currently being displayed, and searches to determine whether there is a same fingerprint as the extracted fingerprint stored in the display apparatus 100 (S1390). When it is searched that there is a same fingerprint as the extracted fingerprint, the display apparatus 100 may perform various operations using various pieces of information matched to the fingerprint and stored.

For example, in response to there being additional information to be additionally displayed on the image matched to the fingerprint, the display apparatus 100 may display the additional information together with the image currently being displayed. Otherwise, the display apparatus 100 may generate viewing history information based on the information (advertisement ID, etc.) related to the image matched to the fingerprint.

In response to determining that there is no fingerprint subjected to matching (S1380), such a subsequent operation will not be performed.

It was explained with reference to FIG. 13 that the server 200 and the real time matching server 300 are separate apparatuses, but they may be realized as one apparatus.

As aforementioned, according to one or more exemplary embodiments, a fingerprint matching operation may be performed by the display apparatus 100 only when necessary, thereby saving unnecessary waste of memory or CPU.

The information provision method of the display apparatus or the information provision method of the server according to the various aforementioned exemplary embodiments may be stored in a non-transitory readable medium. Such a non-transitory readable medium may be mounted on various types of apparatuses.

A non-transitory readable medium refers to a medium readable by an apparatus and that stores data semi-permanently. More specifically, it may be a CD, DVD, hard disk, Blu-ray disk, USB, memory card, ROM and the like.

For example, a non-transitory readable medium may store instructions for causing a processor to execute a method including a step of receiving a fingerprint of a pre-registered image from a server and time information of the fingerprint, a step of detecting whether a pre-registered image corresponding to the fingerprint received from a display of the display apparatus is displayed using the received fingerprint, and a step of, in response to a pre-registered image being displayed, displaying additional information of the pre-registered image on the display, wherein in the step of detecting, a program code for performing a detection operation only within a pre-determined time range based on the received time information is stored in a non-transitory readable medium and provided therein.

The foregoing exemplary embodiments and advantages are exemplary and are not to be construed as limiting the present disclosure. The present teaching can be readily applied to other types of apparatuses. Also, the description of exemplary embodiments is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus (100) comprising:
a communication interface (110) configured to receive a first fingerprint corresponding to a first image and first time information corresponding to the first fingerprint from a server (200);
a display (120) configured to display an image;
a detector (130) configured to detect whether a currently displayed image corresponds to the first image based on the first fingerprint; and
a controller (140) configured to, in response to detecting that the currently displayed image corresponds to the first image, control the display (120) to display first additional information corresponding to the first image, and determine a first time range based on the received first time information and control the detector (130) to perform the detection within the determined first time range, wherein the first fingerprint is data based on characteristics of the first image.

2. The display apparatus according to claim 1,
wherein the communication interface (110) is further configured to receive first channel information corresponding to the first image from the server (200, 300), and
the controller (140) is further configured to control the detector (130) to perform the detection operation only when the currently displayed image corresponds to the first channel information and the first time range.

3. The display apparatus according to claim 2,
wherein at least one among the corresponding first time information and the corresponding first channel information is included in meta data of the first fingerprint.

4. The display apparatus according to any preceding claim,
wherein the controller (140) is further configured to extract a current fingerprint from the currently displayed image, and control the communication interface (110) to transmit the extracted current fingerprint to a real time matching server (300), and receive currently displayed channel information corresponding to the transmitted current fingerprint from the real time matching server (300).

5. The display apparatus according to any preceding claim,
wherein the controller (140) is further configured to generate a viewing log based on a result of detection performed by the detector (130).

6. The display apparatus according to any preceding claim,
further comprising a storage (150) configured to store the first fingerprint received from the server (200),
wherein the controller (140) is further configured to delete an expired fingerprint which has an expired use period from the storage (150).

7. The display apparatus according to any preceding claim,
wherein the first fingerprint comprises unique identification information.

8. An information provision method of a display apparatus, the method comprising:
receiving a first fingerprint of a first image and first time information of the first fingerprint from a server (S1210);
detecting whether the first image corresponds to a currently displayed image displayed on a display of the display apparatus using the first fingerprint (S1220); and
in response to detecting that the first image corresponds to the currently displayed image, displaying first additional information corresponding to the first image on the display (S1230),
wherein:
the detecting involves performing a detection operation within a first time range corresponding to the received first time information;. and
the first fingerprint is data based on characteristics of the first image.

9. The information provision method according to claim 8,
wherein the receiving comprises receiving first channel information corresponding to the first image from the server, and
the detecting is performed only when the currently displayed image corresponds to the first time information and the first channel information.

10. The information provision method according to claim 9,
wherein at least one among the first information and the first channel information is included in metadata of the first fingerprint.

11. The information provision method according to any one of claims 8 to 10,
further comprising extracting a current fingerprint from the currently displayed image; transmitting the extracted current fingerprint to a real time matching server; and receiving currently displayed channel information corresponding to the transmitted current fingerprint from the real time matching server.

12. The information provision method according to any one of claims 8 to 11,
further comprising generating a viewing log based on a result of the detecting.

13. The information provision method according to any one of claims 8 to 12,
further comprising storing the first fingerprint received from the server; and
deleting an expired fingerprint which has an expired use period.

14. The information provision method according to any one of claims 8 to 13, wherein the first fingerprint comprises unique identification information.

15. An information provision system comprising a display apparatus (100) and a server (200) configured to transmit a first finger print of a first image and first time information of the first fingerprint to the display apparatus (100), wherein:
the display apparatus (100) is configured to:
receive the first fingerprint of the first image and the first time information of the first fingerprint from the server (S1210);
detect whether the first image corresponds to a currently displayed image displayed on a display (120) of the display apparatus (100) using the first fingerprint; and
in response to detecting that the first image corresponds to the currently displayed image, display first additional information corresponding to the first image on the display (120),
wherein the detecting involves performing a detection operation within a first time range corresponding to the received first time information, and the first fingerprint is data based on characteristics of the first image.
